# EUROPEAN PATENT APPLICATION

(11) **EP 1 923 394 A1**
(43) Date of publication of application: **21.05.2008**
(21) Application number: 06124260.8
(22) Date of filing: 16.11.2006
(51) Int. Cl.: C07F 9/38, C07F 9/58, C07F 9/6506, C08K 5/52

(54) **Reagent and use thereof for the production of bisphosphonates**

(71) Applicant: Sandoz A/S, 5220 Odense SØ (DK)
(72) Inventor: Lerstrup, Knud, 2830 Virum (DK); Preikschat, Herbert, Fritz, 3460 Birkerod (DK); Fischer, Erik, 3500 Vaerlose (DK)
(74) Representative: Preißinger, Franziska

(57) **Abstract**

A new liquid reagent is disclosed is form of an ionic liquid containing phosphorous acid and a tertiary amine. The reagent can be used as a replacement of phosphorous acid, where the new reagent as a liquid reagent can be handled using usual equipment for handling liquids and the dosing of the reagent can therefore be controlled more precisely in industrial plants compared to phosphorous acid, which is a solid at ambient temperature.

The new liquid reagent is particular suitable for the synthesis of bisphosphonates.

## Description

The present invention relates to a new method of preparing geminal bisphososphonates in particular ibandronic acid, and salts thereof.

In a further aspect the invention relates to new beneficial reagents for the synthesis of ibandronic acid or other bisphosphonates.

### Background for the Invention

Polyphosphosphonic acids and salts thereof have been proposed or used in the treatment of diseases of bone and calcium metabolism including osteoporosis, hyperparathyroidism, hypercalcemia, osteolytic bone metastases, myosistis ossificans progressive, calcinoisis universalis, arthritis, neuritis, bursitis, tendonitis, Paget's disease and heterotropic ossification. In particular bisphosphonates have been the subject of extensive research efforts in this area.

As examples of bisphosphonates that have been subjected to considerable medical interest can be mentioned ibandronic acid, N-methyl-N-pentyl-3-aminopropane-1-hydroxy-1,1-diphosphonic acid, risedronic acid, 1-hydroxy-2-(3-pyridinyl)ethylidene-1,1-diphosphonic acid, alendronic acid, 4-amino-1-hydroxybutylidene-1,1-diphosphonic acid, EHDP, ethane-1-hydroxy-1,1-diphosphonic acid, pamidronic acid, 3-amino-1-hydroxy-propylidene-1,1-diphoshonic acid, zoledronic acid, 1-hydroxy-2-(1-imidazolyl)ethylidene-1,1-diphosphonic acid, minodronic acid, 1-hydroxy-2-(3-imidazo[1,2-a]pyridinyl)ethylidene-1,1-diphosphonic acid, neridronic acid, 3-amino-1-hydroxy-hexylidene-1,1-diphoshonic acid, olpadronic acid, N,N-dimethyl-3-amino-1-hydroxy-propylidene-1,1-diphoshonic acid.

Several methods for preparing bisphosphonates have further been disclosed.

EP 252 504 discloses the synthesis of ibandronic acid by the reaction of N-methyl-N-pentyl-3-aminopropionic acid, phosphorous acid and phosphorus trichloride in chlorobenzene. Subsequent the solvent was removed and the reaction product reacted with 6N hydrochloric acid for the formation of ibandronic acid.

N-methyl-N-pentyl-3-aminopropionic acid, called ibanic acid, was prepard by reacting pentylamine and benzaldehyde for the formation of N-benzylidenepentylamine, which was catalytically hydrogenated to N-benzyl-N-pentylamine. Next N-benzyl-N-pentylamine was reacted with formic acid and formaldehyde to provide N-Benzyl-N-methyl-N-pentylamine, which was debenzylated to provide N-methyl-N-pentylamine. N-methyl-N-pentylamine was reacted with methyl acrylate forming methyl N-methyl-N-pentyl-3-aminopropionate, which was saponified with 1 N NaOH and finally acidified to provide N-methyl-N-Pentyl-3-aminopropionic acid, ibanic acid.

WO 01/57052 discloses a process for making geminal bisphosphonates comprising the steps of providing an aminocarboxylic acid, dissolving the aminocarboxylic acid in phosphorus acid, and reacting the solution with phosphorous trichloride in the presence on a base.

WO 2005/063779 discloses a method for preparing alkyl- and aryl-phosphonic acid, wherein an alkyl- or aryl carboxylic acid is reacted with a mixture of phosphorous acid and phosphorus oxychloride, where a molar ratio of carboxylic acid: phosphorous oxychloride:phosphorous acid of 1:2-4:8-12.

WO 2005/044831 discloses a method of preparing bisphosphonic acids, comprising reacting a carboxylic acid with phosphorous acid and a phosphorous chloride in sulfolane.

WO 03/097655 discloses a method of preparing bisphosphonic acid comprising the step of combining a carboxylic acid, phosphorous acid and a halophosphorous compound in the presence of a diluent that is an aromatic hydrocarbon or a silicon fluid.

WO 03/093282 discloses a method for preparing bisphosphonic acids where the process is carried out in an ionic solvent.

WO 2006/002348 discloses a method for preparing ibandronic acid, where N-methyl-N-pentyl-3-amino-propionic acid, phosphorous acid and a halophosphorous compound in a particular solvent and at a controlled temperature.

The reaction of carboxylic acid, phosphorous acid and a halophosphorous compound is an exothermic reaction that additional releases HCl. Thus, a reaction where carboxylic acid, phosphorous acid and a halophosphorous compound are mixed from the start will initially produce large amounts of HCl and simultaneously lead to a significant temperature increase. After the initial burst the HCl development is more moderate.

For industrial plants designed for producing bisphosphonic acids this has the consequence that the scrubber facilities for removing the evolved HCl and the temperature controlling facilities must be dimensioned to cope with the initial burst of HCl and initial temperature increase. It would therefore from a production technological point of view be beneficial to be able to control the HCl release.

### Short Description of the invention

The invention is based on the finding that a mixture of phosphorous acid and a tertiary amine can form a liquid mixture at ambient temperature, which liquid mixture can be used as a reagent instead of phosphorous acid.

Thus in a first aspect the invention relates to a liquid reagent comprising a mixture of phosphorous acid and a tertiary amine.

The reagent according to the invention has the benefit compared with solid phosphorous acid that it is liquid at ambient temperature, and therefore easier to handle in an industrial plant. Further, as a liquid reagent it will be faster mixed into a reaction mixture and thereby will the reagent sooner take part in a chemical reaction compared to a solid compound such as phosphorous acid, which generally must be dissolved or melted in the reaction mixture before it can take part in any chemical reaction. It will therefore be possible to have a more precise control of an industrial process using the reagent according to the invention compared with phosphorous acid.

In a second aspect the invention relates to a method for preparing bisphosphonates or salts thereof comprising the following steps:
reacting a carboxylic acid with phosphorous trichloride;
adding the liquid reagent according to the invention over a certain time;
adding water; and
optionally adding a base.

The reaction is exothermic and will release heat and hydrochloric acid, however the rate of heat and hydrochloric acid release can be controlled by the rate of addition of the liquid reagent according to the invention. Thus, the reaction may be controlled e.g. such that the release rate of hydrochloric acid does not exceed a certain amount typically determined by the capacity of scrubber facilities or other equipment suitable for removing hydrochloric acid from the exhaust gas. Therefore the method for preparing bisphosphonates according to the invention can be performed with smaller scrubber capacity than would have been necessary if the phosphorous acid was added initially to reaction as a solid or as a melt.

In a preferred embodiment the bisphosphonate is selected from the group of: ibandronate, risedronate, pamidronate, zoledronate and alendronate, most preferred ibandronate.

### Detailed description of the invention

The liquid reagent according to the invention comprises phosphorous acid and a tertiary amine.

In principle, the tertiary amine may be any tertiary amine that are capable of forming a liquid reagent with phosphorous acid, but for practical purposes it is usually preferred using a relative low molecular weight tertiary amine that preferably is commercially available at a low cost.

The skilled person can easily determine if a given tertiary amine is able of forming a liquid mixture with phosphorous acid at ambient temperature by mixing phosphorous acid with the tertiary amine in question in a molar ratio of approximately 5:1 to approximately 1:5 at ambient temperature in 15-30 minutes. If the mixture during that period turns into a homogeneous oily liquid the tertiary amine is able of forming a liquid mixture with phosphorous acid.

The term ambient temperature is in the present application intended to indicate the temperature usually found in industrial laboratory and production facilities such as in the range of 15-30°C, preferably in the range of 20-25°C.

Examples of tertiary amines to be used in the reagent according to the invention can be mentioned N-alkyl morpholine, such as N-methyl morpholine and N-ethyl morpholine, trimethylamine, triethylamine, methyl diethylamine, dimethylethyl amine, N-alkyl pyrrolidine such as N-methyl-pyrrolidine, N-alkyl piperidine such as N-methyl piperidine, N,N-dimethylaniline, ethyl diisopropyl amine.

N-ethyl morpholine and N-methyl morpholine are preferred examples of tertiary amines to be used in the liquid reagent according to the invention; N-ethyl morpholine is most preferred.

The liquid reagents is prepared by mixing solid phosphorous acid and the tertialy amine at ambient temperature and continue the mixing in 15-30 minutes until the mixture is converted to an homogeneous oily liquid.

The molar ratio between the tertiary amine and the phosphorous acid is usually in the range of 1:5 to 5:1, preferably in the range of 1:4 to 4:1, most preferred in the range of 1:3 to 3:1.

Without wishing to be bound by any particular theory it is believed that a proton is exchanged between the phosphorous acid and the tertiary amine forming a salt. Thus it is believed that liquid reagent according to the invention can be considered a salt melt or an ionic liquid.

Once formed the liquid reagent according to the invention is stable at ambient temperature and can be stored and transported without particular measures like ordinary liquids.

The liquid reagent according to the invention can be used as a replacement for solid phosphorous acid in chemical reactions, where the liquid character of the reagent facilitates easy handling.

According to a preferred embodiment of the invention the liquid reagent is used in a method for preparing bisphosphonic acids or salts thereof.

The method for preparing bisphosphonic acids is schematically shown below.

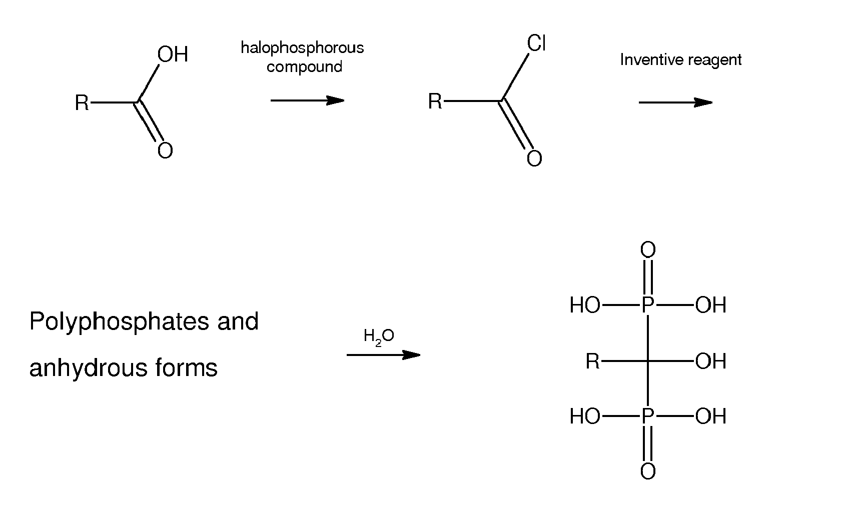

The skilled person will appreciate that the method according to the invention may result in the preparation of bisphosphonic acids or bisphosphonate salts depending solely of the pH conditions of the final step of the method. It is also within the skills of the average practitioner to select the pH condition in the final step in order to secure that the product is obtained as the free acid or as a salt thereof. It should therefore be understood that the method according to the invention applies likewise to the preparation of bisphosphonic acids as of bisphosphonate salts and that the preparation of bisphophionic acids and bisphosphonate salts both are contemplated to be within the scope of the present invention.

In the first step a carboxylic acid is reacted with a halophosphorous compound.

The carboxylic acid R-COOH may in principle be any carboxylic acid. The R moiety of the carboxylic acid will end up in the prepared bisphosphonate and should therefore be selected having the structure of the corresponding R group in the bisphosphonate intended to synthesize. In the case that the preparation is intended of a bisphosphonate having a group that would not be stable under the selected reaction conditions, e.g. further carboxylic acid groups and amine groups; it may be possible protecting the particular groups by suitable protection groups as it is well known within the area. In that case R should be selected so it contains the protected groups corresponding to the groups of the intended bisphosphonate. In this embodiment one or more deprotection steps will follow the disclosed method.

In case that the carboxylic acid contains one or more nitrogen atom(s), an acid addition salt of the carboxylic acid such as the hydrochloride, may be used instead of the free acid.

As preferred examples of the group R according to the invention can be mentioned N-methyl-N-pentyl-2-aminoethyl for the preparation of ibandronate; (3-pyridinyl)-methyl for the preparation of risedronate; and 2-aminoethyl for the preparation of pamidronate, 3-amino-propyl for the preparation of alendronate, 1-methylimidazol for the preparation of zoledronate, 3methylH-imidazo[1,2-a]pyridine for the preparation of minodronate, 5-aminopentyl for the preparation of neridronate, N,N-dimethyl-2-aminoethyl for the preparation of olpadronate.

The halophosphorous compound is preferably selected from the group of PCl₃, PCl₅, POCl₃, PBr₃, PBr₅ and POBr₃, where PCl₃ is most preferred.

The reaction suitable takes place by suspending the carboxylic acid in a solvent with an excess of the halophosphorous compound until the corresponding acid halide is formed.

The molar ratio of carboxylic acid to halophosphorous is usually in the range of 1:3, preferably in the range of 1:2 and most preferred in the range of 1:1.5.

The solvent may in principle be any solvent that is inert and capable of dissolving the acid. A preferred solvent is chlorobenzene.

The reaction may take place at any temperature between ambient temperature and the boiling point of the solvent or the boiling point of halophosphorous compound whichever is lower, suitable at a temperature between 30°C and 100°C, preferably in the range of 60°C - 80°C in order to secure a suitable reaction speed.

In the second step the reagent according to the invention is slowly added to the reaction mixture of the first step under stirring.

The reaction proceeds rapidly with release of hydrochloric acid.

The reagent according to the invention may be added over a certain period for example between a few minutes and several hours, preferably between 10 minutes and 2 hours, more preferred between 15 minutes and one hour.

After the addition stirring is continued to complete the reaction, which may be determined by the cessation of hydrochloric acid evolution.

During this step the mixture may turn very viscous, which is believed to be due to formation of polyphosphonates and anhydrides.

After the completion of the reaction, water is added and stirring is continued.

The stirring is continued preferably under heating, until all polyphosphates and anhydrate forms have been hydrolysed, usually in a period between 1 hour and 8 hours, preferably in a period between 1 hour and 4 hours.

At this point the mixture will contain two phases where the formed bisphosphonic acid will be dissolved in the aqueous phase.

If desired a base may be added in order to convert the bisphosphonic acid to the corresponding bisphosphonic salt. A preferred base is NaOH for the formation of a bisphosphonate sodium salt.

The formed bisphosphonic acids or salts thereof are purified using well known procedures. The invention is now explained in further details in the following examples, which are provided for illustratory purposes only and should not be considered limiting in any ways.

All references cited in the description are incorporated by reference.

### Examples

### Example 1. Preparation of reagent

A reagent consisting of phosphorous acid and N-ethylmorpholine having a ratio of phosphorous acid to N-ethylmorpholine of approximately 3:1 was prepared using following method.

61 g Phosphorous acid (750 mmole) was mixed with 29 g N-ethylmorpholine (250 mmole) and stirred until a clear, uniform, oily liquid had formed.

### Example 2. Preparation of N-methyl-N-pentyl-3-aminopropionic acid, ibanic acid

### N-Methylpentylamin:

Benzyl-methylamine (121g, 1mol) was mixed with bromopentane (180g, 1,2mol) and potassium carbonate (180g, 1,3mol) in 200ml acetonitrile and 200ml water and allowed to react at 50°C for 5-20 hours until TLC showed that all methylbenzylamine was consumed. Heptane was added and the bottom layer was separated and discarded. The organic phase was extracted once with water (200ml) and then with methanol (250ml) containing 0,65mol oxalic acid. The layers were separated and the bottom phase (methanol) was extracted once with heptane. The methanolic solution was subjected to catalytic hydrogenation over palladium on carbon at 30°C and 3bar pressure until the calculated amount of hydrogen has been consumed. The mixture was filtered warm from the catalyst and 0,35mol oxalic acid dissolved in 50ml methanol was added, and the methyl-pentylamine oxalate was precipitated from the warm solution by addition of ethyl acetate. After cooling and filtration, the material was isolated in about 80% overall yield. M. p. 163-164°C.

### N-methyl-N-pentyl-3-aminopropionic acid methyl ester:

The oxalate (96g, 500mmol) was mixed with potassium carbonate (70g, 500mmol) and methyl acrylate (50g, 1,15eq.) and water (100ml). Carbon dioxide was evolved and the mixture was stirred at 40-50°Cfor about 16 hours. The water and potassium oxalate was removed and the product was distilled at reduced pressure to provide the title compound in 80-90% yield as a colorless liquid. B. p. 70-72°C @ 1mm Hg.

### Example 3. Preparation of ibanic acid hydrochloride

### N-methyl-N-pentyl-3-aminopropionic acid hydrochloride ("Ibanic Acid hydrochloride"):

N-methyl-N-pentyl-3-aminopropionic acid methyl ester: (75g, 400mmol) was dissolved in 75g of n-propanol and added 62g 28% (1,1eq.) aqueous sodium hydroxide to afford instant hydrolysis of the ester accompanied by a 25-30° rise in temperature. The solution was allowed to cool for 2 hours and the pH was reduced to 6,5 by addition of concentrated sulfuric acid with cooling. The mixture was filtered from salt and concentrated in. vac. The material was dissolved in an equal amount of toluene and refluxed with a water trap to completely dry the material. Acetone, 75g, was added and the solution was filtered and dry HCl (400mmol, 14g) was added with cooling to precipitate the hydrochloride salt of ibanic acid. The white crystals was filtered off, rinsed with acetone:ethyl acetate 1:1 and air dried to provide 70-80g (85-95%) of white platelets with melting point 99-100°C.

### Example 4. Preparation of monosodium ibandronate monohydrate.

105 g ibanic acid hydrochloride (500 mmole) was suspended in chlorobenzene (225 g) together with 103 g phosphorous trichloride (750 mmole). The suspension was heated to 70°C for two hours to produce an opaque 2-phase liquid system containing the acid chloride of ibanic acid.

90g of the reagent prepared in example 1, corresponding to 750 mmole phosphorous acid, was added drop-wise while the temperature was maintained between 50°C and 60°C over about 20 minutes. The temperature was raised to 80°C and the mixture was stirred slowly while it gradually turned very viscous. During the addition and afterwards about 1.9 mole HCl was evolved. After 1.5 to 2 hours the HCl evolution ceased and stirring was continued for another hour at 80°C while the mixture turned yellowish. Water (200 ml) was added and the mixture was refluxed for 4 hours.

After cooling the layers were separated and the aqueous layer (bottom) was extracted once with ethyl acetate (100 ml) to remove traces of chlorobenzene.

29 g N-ethylmorpholine (250 mmole) was added in order to avoid too high a concentration of sodium chloride that otherwise might co-precipitate and pH was adjusted to 4.3-4.4 by addition of 28% aqueous NaOH (177 g, 1.22 mole) raising the temperature to 80°C. The hot slightly coloured mixture was filtered with suction, the filtrate (500 ml) was transferred to a beaker and ethanol (150 ml) was added to induce precipitation. The mixture was transferred to a sintered glass funnel and the solvent removed with suction. The white crystals were rinsed with 30% aqueous ethanol and dried.

Raw yield after drying was 135 g (71%) containing 2-3 % residual ethanol.

The material was dissolved in 275 g water at 80°C and water and the ethanol was distilled off. The solution was added water up to the original volume and the product was precipitated by the addition of 275g acetone. The crystals were collected on a glass filter, rinsed with 50% aqueous acetone and dried to provide 112 g of the title compound as white crystals (60%).

### Example 5. Preparation of risedronic acid.

87 g 3-pyridineacetic acid hydrochloride (500 mmole) was suspended in 225 g chlorobenzene together with 103 g phosphorous trichloride (750 mmole) and heated to 50°C for one hour to produce an opaque, 2 phase liquid system containing the acid chloride of 3-pyridineacetic acid.

90 g of the reagent prepared in example 1, corresponding to 750 mmole phosphorous acid, was added drop wise while keeping the temperature between 50°C and 60°C over about 20 minutes. The temperature was raised to 80°C and the mixture was stirred slowly while the mixture gradually turned very viscous and could hardly be stirred. During the addition and afterwards about 1.9 mole HCl evolved. After 1.5 to 2 hours the HCl evolution ceased and stirring was continued for another hour at 80°C while the mixture turned yellowish. Water (200 ml) was added and the mixture was refluxed for 4 hours.

The reaction mixture was filtered through a Millipore HVLP2932A filter and the filtrate cooled under stirring.

The formed crystalline material was recovered by filtration washed briefly with water and with ethanol and dried over night at 45°C.

A yield of 102 g (67.7%) in form of white crystals was obtained.

## Claims

1. Liquid reagent comprising phosphorous acid and a tertiary amine capable of forming a liquid reagent with phosphorous acid.

2. Liquid reagent according to claim 1, wherein the amine is selected among the group of N-alkyl morpholine, trimethylamine, tri ethylamine, methyl diethylamine, dimethylethyl amine, N-alkyl pyrrolidine such as N-methyl-pyrrolidine, N-alkyl piperidine such as N-methyl piperidine, N,N-dimethylaniline.

3. Liquid reagent according to claim 2, wherein the amine is selected among N-methyl morpholine, N-ethyl morpholine and trimethylamine.

4. Liquid reagent according to any of the claims 1-3, wherein the molar ratio of phosphorous acid to tertiary amine is in the range of 1:5 to 5:1.

5. Liquid reagent according to claim 4, wherein the molar ratio of phosphorous acid to tertiary amine is in the range of 1:4 to 4:1.

6. Liquid reagent according to claim 5, wherein the molar ratio of phosphorous acid to tertiary amine is in the range of approximately 1:3 to 3:1.

7. Liquid reagent according to claim 6, wherein the tertiary amine is N-ethyl morpholine and the molar ratio of phosphorous acid to N-methyl morpholine is approximately 3:1.

8. Use of the liquid reagent according to any of the claim 1-7 in a chemical reaction.

9. Method for preparing bisphosphonic acids or salts thereof comprising the following steps:
a. a carboxylic acid R-COOH is reacted with a halophosphorous compound;
b. the reagent according to any of the claims 1 to 7, is added to the reaction mixture under agitation;
c. water is added;
d. optionally a base is added; and
e. the formed bisphosphonic acid or salt thereof is purified from the aqueous phase.

10. Method according to claim 9, where the carboxylic acid is selected among: N-methyl-N-pentyl-3-aminopropionic acid, 2-(3-pyridinyl)-acetic acid, 2-(1H-imidazol-1-yl)-acetic acid, 2-(H-imidazo[1,2-a]pyridin-3-yl)acetic acid, 6-amino-hexanoic acid, 3-(dimethylamino)propanoic acid, 3-amino-propionic acid and 4-amino butanoic acid, or any acid addition salts thereof.

11. Method according to claim 9 or 10, wherein the halophosphorous compound is selected among: PCl₃, PCl₅, POCl₃, PBr₃, PBr₅ and POBr₃.

12. Method according to any of the claims 9-11, wherein the addition in step b. takes place over a period of between 15 minutes and 4 hours.

13. Method according to any of the claims 9-12, where in step d. a base selected among NaOH and KOH is added.

14. Method according to claim 13, for preparing sodium ibandronate where the carboxylic acid is N-methyl-N-pentyl-3-aminopropionic acid or an acid addition salt thereof, the halophosphorous compound is PCl₃, and NaOH is added in step d.

15. Method according to claim 13, for preparing sodium risedronate, where the carboxylic acid is 2-(3-pyridinyl)-acetic acid or an acid addition salt thereof, the halophosphorous compound is PCl₃, and NaOH is added in step d.

16. Method according to claim 13, for preparing sodium zoledronate, where the carboxylic acid is 2-(1H-imidazol-1-yl)-acetic acid or an acid addition salt thereof, the halophosphorous compound is PCl₃, and NaOH is added in step d.

17. Method according to claim 13, for preparing sodium pamidronate, where the carboxylic acid is 3-amino-propionic acid or an acid addition salt thereof, the halophosphorous compound is PCl₃, and NaOH is added in step d.
